# EUROPÄISCHE PATENTSCHRIFT

(11) **EP 0 858 975 B1**
(45) Veröffentlichungstag und Bekanntmachung des Hinweises auf die Patenterteilung: **19.09.2001**
(21) Anmeldenummer: 98100606.7
(22) Anmeldetag: 15.01.1998
(51) Int. Cl.: C03C 3/095, C03C 17/245, A61J 1/00, B65D 23/02

(54) **Sterilisierbarer Glasbehälter für medizinische Zwecke, insbesondere zur Aufbewahrung pharmazeutischer oder diagnostischer Produkte**
Sterilisable glass container for medicinal purposes, in particular for keeping pharmaceutical or diagnostical products
Récipient en verre stérilisable pour utilisation médicinale, en particulier pour garder des produits pharmaceutiques ou diagnostiques

(30) Priorität: 18.02.1997 DE 19706255
(43) Veröffentlichungstag der Anmeldung: 19.08.1998
(73) Patentinhaber: Schott Glas, 55122 Mainz (DE); CARL-ZEISS-STIFTUNG trading as SCHOTT GLAS, 55122 Mainz (DE)
(72) Erfinder: Spallek, Michael, Dr., 55218 Ingelheim (DE); Walther, Marten, Dr., 55270 Engelstadt (DE); Geiger, Andreas, 55286 Wörrstadt (DE)

(56) Entgegenhaltungen:
- DE-U- 29 609 958
- FR-A- 2 697 014
- US-A- 3 499 775
- DATABASE WPI Section Ch, Week 9238 Derwent Publications Ltd., London, GB; Class B07, AN 92-312903 XP002065522 & JP 04 219 343 A (NIPPON ELECTRIC GLASS CO)
- DATABASE WPI Section Ch, Week 7942 Derwent Publications Ltd., London, GB; Class L01, AN 79-75931B XP002065523 & JP 54 113 618 A (TOSHIBA KASEI KOGYO)

## Beschreibung

Die Erfindung betrifft sterilisierbare Glasbehälter für medizinische Zwecke, insbesondere zur Aufbewahrung pharmazeutischer oder diagnostischer Produkte, insbesondere Lösungen. Solche Behälter sind dazu bestimmt, in direkten Kontakt mit dem Inhalt zu kommen. Es kommen die verschiedensten Arten von Glasbehältern zur Anwendung, beispielsweise Fläschchen (detailliert beschrieben z. B. in der ISO-Norm 8362, Teil 1), Ampullen (detailliert beschrieben z. B. in der ISO-Norm 9187, Teil 1), Spritzenkörper (detailliert beschrieben z. B. in der ISO-Norm 11040, Teil 4), Glaszylinder (detailliert beschrieben z. B. in der ISO-Norm 13926, Teil 1) sowie Flaschen (detailliert beschrieben z. B. in der ISO-Norm 8356, Teil 1). Die Füllvolumina schwanken bei diesen Behältern zwischen 0,5 und 2000 ml.

Für diese Zwecke, beispielsweise für die Verpackung von Injektionslösungen, sind Gläser mit großer hydrolytischer Resistenz (laut den Pharmakopöen, z.B. Deutsches Arzneibuch DAB 10, Gläser der Glasart I oder II) erforderlich. Glasbehälter, die diese Anforderungen erfüllen, sind aus dem deutschen Gebrauchsmuster DE 296 09 958.9 bekannt, das Glasbehälter beschreibt, deren mit den Lösungen in Kontakt stehenden Oberflächen mit einer mittels eines Plasma-CVD-Verfahrens aufgebrachten Schicht aus Oxiden undloder Nitriden der Elemente Si, Ti, Ta, Al überzogen sind.

Auch FR 2 697 014 beschreibt ein Verfahren zum Aufbringen von SiO₂₋ Schichten auf Glassubstrate, die eine Barriere gegen die Alkalilässigkeit der Gläser darstellen.

Für die überwiegende Zahl der medizinischen und pharmazeutischen Verwendungen ist es notwendig, daß die leeren Behältnisse vor ihrem Befüllen sterilisiert werden. Geeignete Methoden zur Sterilisierung von Glasbehältnissen stellen derzeit nur apparativ aufwendige chemische Verfahren wie die Begasung mit Ethylenoxid, das Autoklavieren mit überhitztem Wasserdampf oder eine Hitzesterilisation bei Temperaturen von etwa 250 bis 300 °C dar. Hier besteht ein großer Verbesserungsbedarf.

Eine weitere Methode, die Sterilisierung mittels energiereicher Strahlung (z. B. β-Strahlung, γ-Strahlung, starke UV-Strahlung), ist hier nicht anwendbar, da die bisher verwendeten Gläser, beispielsweise herkömmliche Borosilicatgläser oder auch Kalk-Natron-Gläser sich nach Sterilisation durch energiereiche Strahlung in Abhängigkeit von der Strahlen-Dosis inhomogen gelb bis braun, oft fleckig, verfärben. Die Färbung ist in Abhängigkeit von der Zeit, der Temperatur und dem Lichteinfluß veränderlich. Eine solche häufig uneinheitliche Verfärbung bzw. die Veränderlichkeit der Verfärbung ist für pharmazeutische Anwendungen nicht akzeptabel, da eine sichere optische Inspektion des Inhalts nahezu unmöglich wird.

So läßt sich z. B. ein pulverförmiger Inhalt eines inhomogen (fleckig) verfärbten Behälters nicht sicher auf Fremdpartikel kontrollieren. Da solche Kontrollen heutzutage überwiegend mit vollautomatischen Systemen durchgeführt werden, führt jede sichtbare Abweichung von einer festgelegten Norm (einem farblosen oder homogen gefärbten Behälter) zum Aussortieren des betroffenen Behältnisses und evtl. sogar zum Stillstand einer ganzen Produktionslinie.

Die Verwendung energiereicher Strahlung für die Sterilisation kann vorteilhaft auch bei bereits gefüllten Behältnissen eingesetzt werden. Auch hier ist eine Verfärbung des Behälters nicht akzeptabel, da dies die Kontrollierbarkeit durch den Arzneimittelhersteller, den Apotheker und den Anwender gravierend einschränken würde. Für den Endanwender ist es z. B. wichtig, daß zwei Behältnisse, die das gleich Produkt enthalten, visuell identisch sind, da ansonsten nicht entschieden werden kann, welcher Behälter ggf. ein verdorbenes Produkt enthält.

In der Glaschemie ist es hinlänglich bekannt, durch Zusätze von Stabilisatoren, insbesondere von Ceroxid, die durch energiereiche Strahlen hervorgerufene Braunfärbung zu unterdrücken.

So beschreibt JP 4-219343 A ceroxid- und vanadiumoxidhaltige Glaszusammensetzungen, die einen verringerten durch γ-Strahlen hervorgerufenen Transmissionsverlust zeigen. Außerdem sind die Gläser UV-absorbierend.

Ceroxidhaltige Gläser sind jedoch als Materialien für Behälter zur Aufbewahrung von pharmazeutischen und diagnostischen Lösungen bisher nicht akzeptabel, da Ce-Ionen während der Lagerung an die Lösung abgegeben werden können und andere Glasbestandteile wie SiO₂, Al₂O₃ etc. nach der Bestrahlung in höherem Maße als bei unbestrahlten Behältern abgegeben werden Da die Wechselwirkung des Inhaltsstoffes mit den ausgelaugten Cer-lonen kritisch sein kann, d. h. die Wirksamkeit des Medikamentes gravierend beeinflußt werden kann, müßte in jedem Einzelfall die Beeinträchtigung des Inhalts durch Ce-Ionen bei unterschiedlichen Lagerbedingungen und Zeiten untersucht werden. Dies bedeutete einen immensen Prüfaufwand.

Die Aufgabe der Erfindung besteht nun darin, einen Glasbehälter zur Aufbewahrung pharmazeutischer oder diagnostischer Lösungen zu finden, der durch energiereiche Strahlung sterilisierbar ist, ohne daß eine sichtbare Verfärbung eintritt, und der sich gegenüber den Lösungen in hohem Maße inert verhält.

Die Aufgabe wird durch den im Hauptanspruch beschriebenen Glasbehälter gelöst.

Das Glas, aus dem der Behälter besteht, enthält Ceroxid als Stabilisator gegen energiereiche Strahlung, d.h. einen Stabilisator, der eine durch die Strahlung hervorgerufene Verfärbung im Glas verhindert.

Es können die für pharmazeutische Anwendungen üblichen Gläser eingesetzt werden. Vorzugsweise wird man solche Gläser verwenden, die bereits an sich eine große hydrolytische Resistenz aufweisen, also insbesondere die sogenannten Neutralgläser (Borosilicatgläser) (DAB 10, Glastyp I). Es können aber auch Kalk-Natrongläser verwendet werden, die unbeschichtet dem Glastyp III (DAB 10) entsprechen.

Die Erfindung betrifft nicht nur farblose, sondern auch farbige Behältnisse, da auch bei den für lichtempfindliche Substanzen eingesetzten Braungläsern eine zusätzliche und ungleichmäßige Verfärbung durch energiereiche Strahlung unerwünscht ist.

Der Stabilisator ist Ceroxid, das vorzugsweise mit einem Gehalt von 0,3 bis 1,5 Gew.-% im verwendeten Glas vorliegt. Die genannte Mindestmenge gewährleistet eine ausreichende Wirkung. Ein höherer Gehalt als 1,5 Gew.-% ist aufgrund der sich dann störend bemerkbar machenden Eigenfarbe des Ceroxids meist nicht sinnvoll, aufgrund der Wirksamkeit des Ceroxids aber auch nicht nötig. Bevorzugt ist ein Gehalt zwischen 0,5 und 1,5 Gew.-%.

Der Glasbehälter ist auf seiner Innenseite, also auf seiner mit der Lösung in Kontakt stehenden Oberfläche, mit einer Schicht aus Oxiden und/oder Nitriden der Elemente Si, Ti, Ta, Al oder Mischungen davon überzogen.

Vorzugsweise ist die Schicht mittels eines Plasma-CVD-Verfahrens (PCVD-Verfahren) erzeugt worden, insbesondere mittels des Plasma-Impuls-Verfahrens (PICVD-Verfahren). Bei diesen Verfahren findet eine Schicht-Abscheidung aus der Gasphase (CVD = chemical vapour deposition) statt, wobei die Energie, die zur Spaltung der Precursor-Gase erforderlich ist, durch ein elektrisches Hochfrequenz-Plasma in das System eingebracht wird. Diese Verfahren sind an sich wohlbekannt. Nach diesen Verfahren hergestellte Schichten weisen eine besonders hohe Widerstandsfähigleit gegenüber Auslaugung durch die Lösung und gegen energiereiche Strahlung auf.

Besonders geeignet sind oxidische Schichten, insbesondere solche aus SiO₂ und/oder TiO₂, wobei SiO₂ bevorzugt wird.

Die Schicht muß eine Dicke von weniger als 400 nm aufweisen, da sie, nicht ceroxidhaltig, durch die energiereiche Strahlung verfärbt werden kann, mit dieser Dünne - geringer als die Wellenlänge des sichtbaren Lichtes - aber mit dem bloßen Auge nicht wahrnehmbar ist. Bevorzugt sind Schichtdicken zwischen 10 und 200 nm. Es können auch mehrere Schichten unterschiedlicher Zusammensetzung als Schichtenpaket abgeschieden werden, wobei dann das Schichtenpaket die o.a. Schichtdicke besitzen soll.

Eine solche Schicht besitzt eine hervorragende Sperrwirkung gegen die Auslaugung von Ionen aus dem Glas durch die Lösung, insbesondere auch und für die Erfindung wesentlich gegen die Auslaugung von Cer-Ionen.

Bevorzugt kommen folgende Glasbehälter zur Anwendung: Injektionsfläschchen, Spritzenkörper, Glaszylinder oder Injektionsflaschen.

Die besonderen Eigenschaften des erfindungsgemäßen Glasbehälters werden an folgenden Beispielen beschichteter Glasfläschchen gezeigt:

Es wurden Fläschchen gemäß ISO 8362, Teil I mit einer Flaschengröße von 6R verwendet.

Tabelle 1 gibt eine Übersicht über die untersuchten Glaszusammensetzungen. Die Gläser 1 - 6 sind Kalk-Natron-Gläser; die Gläser 7 - 14 sind Borosilikatgläser. Die Gläser 1 und 7 enthalten keinen Stabilisator gegen energiereiche Strahlung und dienen als Vergleichsbeispiele.

**Tabelle 1:**

| Verwendete Glaszusammensetzungen *) (Gehalt in Gew.-%): | | | | | | | | | |
|---|---|---|---|---|---|---|---|---|---|
| Glas | SiO₂ | B₂O₃ | Al₂O₃ | Na₂O | K₂O | MgO | CaO | BaO | Ce₂O₃ |
| 1 | 69 | 1,0 | 4 | 12,5 | 3,5 | 2,5 | 5 | 2 | 0 |
| 2 | 68,7 | 1,0 | 4 | 12,5 | 3,5 | 2,5 | 5 | 2 | 0,3 |
| 3 | 68,5 | 1,0 | 4 | 12,5 | 3,5 | 2,5 | 5 | 2 | 0,5 |
| 4 | 68,2 | 1,0 | 4 | 12,5 | 3,5 | 2,5 | 5 | 2 | 0,8 |
| 5 | 68 | 1,0 | 4 | 12,5 | 3,5 | 2,5 | 5 | 2 | 1,0 |
| 6 | 67,5 | 1,0 | 4 | 12,5 | 3,5 | 2,5 | 5 | 2 | 1,5 |
| 7 | 75 | 11 | 5 | 7 | | | 1,5 | 0,5 | 0 |
| 8 | 74,2 | 11 | 5 | 7 | | | 1,5 | 0,5 | 0,8 |
| 9 | 79,5 | 13 | 2,5 | 3,5 | 0,5 | | | | 0,5 |
| 10 | 70,5 | 8 | 5,5 | 7 | 1,5 | | 1 | 2 | 0,3 |
| 11 | 70 | 8 | 5,5 | 7 | 1,5 | | 0,5 | 2 | 0,8 |
| 12 | 72 | 11 | 7 | 7 | 1 | | 1 | | 0,8 |
| 13 | 72,5 | 10 | 6 | 6 | 3 | | 0,5 | | 0,8 |
| 14 | 73,5 | 10 | 6 | 8 | 1 | | | | 0,8 |

| | | | | | | | | | |
|---|---|---|---|---|---|---|---|---|---|
| *) Rest zu 100 % andere Elemente (bei Nr. 10 und 11 Fe₂O₃ und TiO₂ zusammen 3,5 %). | | | | | | | | | |

Glasfläschchen mit den aufgelisteten Zusammensetzungen, die auf ihrer Innenseite eine nach dem PICVD-Verfahren aufgebrachte 100 nm - 150 nm dicke SiO₂-Schicht besitzen, wurden mit unterschiedlichen Energiedosen bestrahlt und hinsichtlich farblicher Veränderungen untersucht. Dies geschah durch visuelle Inspektion im Durchlicht; die Prüfung der Farbänderung erfolgte ca. 3 Wochen nach Bestrahlung.

Die Ergebnisse sind in Tabelle 2 zusammengefaßt:
Sie zeigen, daß die beschichteten und bestrahlten Behältnisse sich bei Konzentrationen von 0,3 Gew.-% und mehr Ceroxid im Glas nicht sichtbar verfärben bzw. äußerst schwach verfärben, so daß die o.g. Kontrollen nicht beeinträchtigt werden. Die Transmissionswerte der beschichteten und bestrahlten Fläschchen unterscheiden sich nur geringfügig von den beschichteten und unbestrahlten Fläschchen.

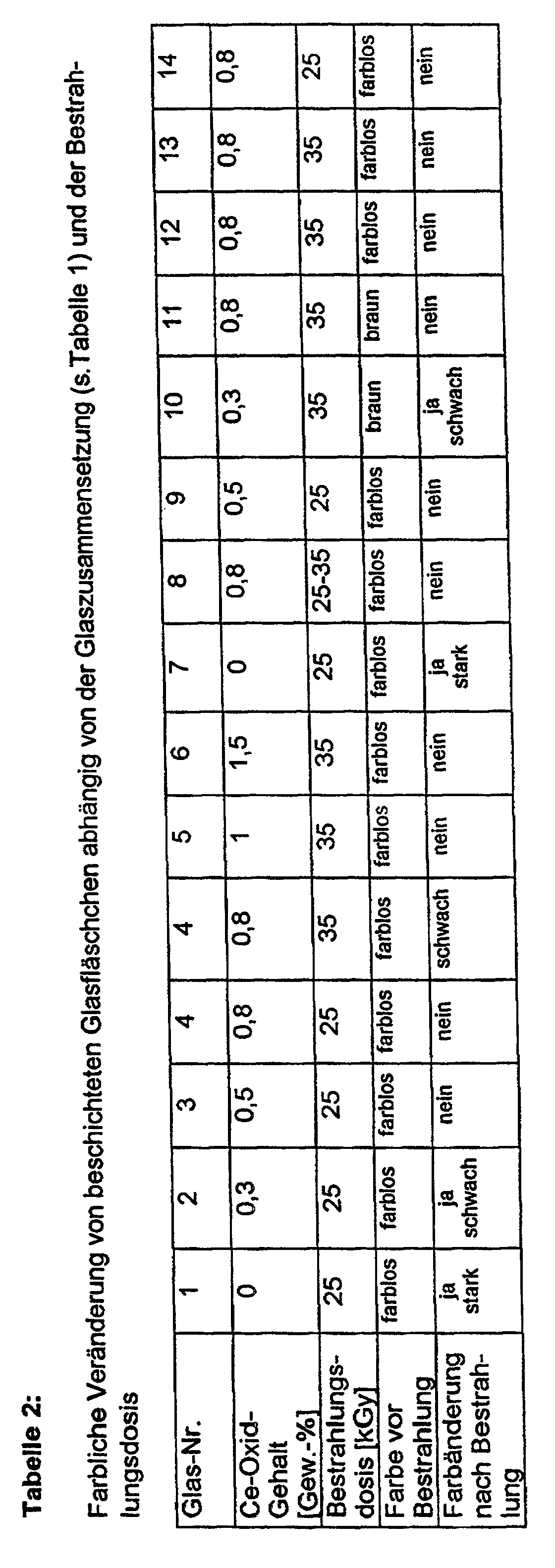

Sowohl unbeschichtete als auch beschichtete Glasfläschchen ausgewählter Zusammensetzungen gemäß Tabelle 1 wurden mit verschiedenen Energiedosen bestrahlt. Dann wurden sie mit zweifach destilliertem Wasser gefüllt und anschließend 60 min bei 121 °C autoklaviert. Anschließend wurde die Menge an freigesetzten Silicium- und Ce-lonen in µg/ml bestimmt. Die Ergebnisse sind in Tabelle 3 zusammengestellt. Die Bestimmung der lonenkonzentrationen erfolgte mittels Atomabsorptionsspektroskopie. Die angegebenen Meßwerte sind Mittelwerte von jeweils 5 - 7 Einzelbestimmungen. Alle Konzentrationen sind auf die jeweiligen Oxide umgerechnet und sind in µg/ml (ppm) angegeben.

Die in Tabelle 3 angegebenen Ergebnisse zeigen, daß die Beschichtung eine sehr gute Sperrwirkung gegen die Auslaugung der genannten Ionen aufweist und daß diese Wirkung auch durch die Bestrahlung nicht beeinträchtigt wird, während bei unbeschichteten Behältern die sowieso schon starke Auslaugung von Cer-Ionen und Si-lonen durch die Bestrahlung noch weiter erhöht wird.

**Tabelle 3**

| Eluatkonzentrationen bei beschichteten und unbeschichteten, bestrahlten und unbestrahlten Gläsern ausgewählter Zusammensetzungen (s. Tabelle 1) | | | | | |
|---|---|---|---|---|---|
| Glas-Nr. | Ce₂O₃-Gehalt [Gew.-%] | Beschichtung 100 - 150 nm SiO₂ mit PICVD | Bestrahlungsdosis [kGy] | Eluatkonzentrationen [µg/ml] | |
| | | | | SiO₂ | Ce₂O₃ |
| 1 | 0 | ja | 0 | < 0,3 | - |
| 1 | 0 | ja | 25 | < 0,3 | - |
| 1 | 0 | nein | 0 | 9,4 | - |
| 1 | 0 | nein | 25 | 10,8 | - |
| 4 | 0,8 | ja | 0 | < 0,3 | < 0,05 |
| 4 | 0,8 | ja | 35 | < 0,3 | < 0,05 |
| 4 | 0,8 | nein | 0 | 9,6 | 2,6 |
| 4 | 0,8 | nein | 35 | 11,8 | 3,0 |
| 7 | 0 | ja | 0 | < 0,3 | - |
| 7 | 0 | ja | 25 | < 0,3 | - |
| 7 | 0 | nein | 0 | 4,6 | - |
| 7 | 0 | nein | 25 | 5,8 | - |
| 8 | 0,8 | ja | 0 | < 0,3 | < 0,05 |
| 8 | 0,8 | ja | 35 | < 0,3 | < 0,05 |
| 8 | 0,8 | nein | 0 | 4,4 | 2,1 |
| 8 | 0,8 | nein | 35 | 5,6 | 2,4 |
| 12 | 0,8 | ja | 0 | < 0,3 | < 0,05 |
| 12 | 0,8 | ja | 35 | < 0,3 | < 0,05 |
| 12 | 0,8 | nein | 0 | 6,1 | 2,9 |
| 12 | 0,8 | nein | 35 | 7,6 | 3,1 |
| 13 | 0,8 | ja | 0 | < 0,3 | < 0,05 |
| 13 | 0,8 | ja | 35 | < 0,3 | < 0,05 |
| 13 | 0,8 | nein | 0 | 3,7 | 1,8 |
| 13 | 0,8 | nein | 35 | 5,0 | 2,3 |
| 14 | 0,8 | ja | 0 | < 0,3 | < 0,05 |
| 14 | 0,8 | ja | 0,25 | < 0,3 | < 0,05 |
| 14 | 0,8 | nein | 0 | 5,1 | 2,5 |
| 14 | 0,8 | nein | 0,25 | 5,2 | 3,4 |
| Die Nachweisgrenzen waren: SiO₂: 0,3 µg/ml Ce₂O₃: 0,05 µg/ml - : nicht untersucht | | | | | |

Die beschichteten Behältnisse aus den Kalk-Natron-Gläsern 2 - 6 entsprechen somit den Spezifikationen für Glasbehälter des Typs II gemäß Deutschem Arzneibuch (DAB 10).
Auch in Borosilikatgläsem ist eine Strahlensterilisation ohne Verfärbung oder Farbänderung möglich, ohne daß es zur Auslaugung (Eluierung) von Ce-Ionen nach Autoklavierung kommt. Die beschichteten Behältnisse aus den Gläsern 7 - 14 entsprechen den Spezifikationen für Glasbehälter des Typs I gemäß Deutschem Arzneibuch (DAB 10).

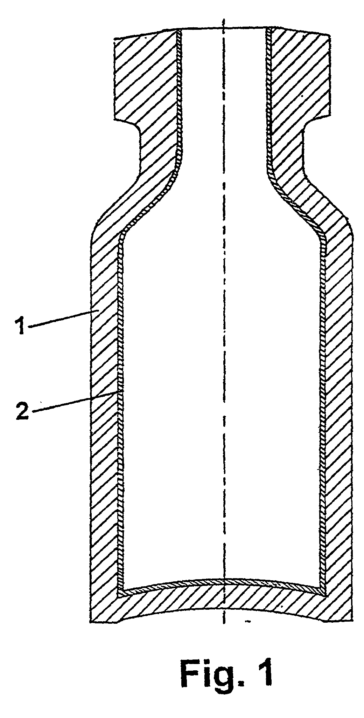

Die Abbildung zeigt in Figur 1 beispielhaft ein 10-ml-Injektionsfläschchen. Das Fläschchen besteht aus dem ceroxidhaltigen Glaskörper 1 und der innenseitigen SiO₂-Schicht 2. Die Dicke der SiO₂-Schicht ist nicht maßstabgetreu dargestellt.

Der erfindungsgemäße Glasbehälter ist mit den üblichen Dosen (25 bis 35 kGy) sterilisierbar, ohne sich sichtbar zu verfärben, und erfüllt bzw. übertrifft die Anforderungen des DAB und der europäischen Pharmakopöe an Behältnisse der Glasart II.

Durch die erfindungsgemäße neuartige Kombination von an sich bekannten Einzelmerkmalen erhält man also auf bestechend einfachem Wege einen strahlensterilisierbaren, keine störende Färbung aufweisenden, hinreichend inerten Glasbehälter, insbesondere für die Aufbewahrung pharmazeutischer oder diagnostischer Produkte.

## Patentansprüche

1. Glasbehälter für medizinische Zwecke, sterilisierbar durch energiereiche Strahlung, insbesondere zur Aufbewahrung pharmazeutischer oder diagnostischer Produkte, insbesondere Lösungen, dessen mit der Lösung in Kontakt stehende Oberfläche mit einer Schicht aus Oxiden und/oder Nitriden der Elemente Si, Ti, Ta, Al oder Mischungen davon überzogen ist,
**dadurch gekennzeichnet,**
**daß** er aus einem Ceroxid als Stabilisator enthaltenden Glas besteht und daß die Schicht weniger als 400 nm dick ist.

2. Glasbehälter nach Anspruch 1,
**dadurch gekennzeichnet,**
**daß** das Ceroxid mit einem Anteil von 0,3 bis 1,5 Gew.-% im Glas vorhanden ist.

3. Glasbehälter nach Anspruch 1 oder 2,
**dadurch gekennzeichnet,**
**daß** die Schicht 10 bis 200 nm dick ist.

4. Glasbehälter nach wenigstens einem der Ansprüche 1 bis 3,
**dadurch gekennzeichnet,**
**daß** die Schicht aus SiO₂ besteht.

5. Glasbehälter nach wenigstens einem der Ansprüche 1 bis 4,
**dadurch gekennzeichnet,**
**daß** die Schicht mittels eines Plasma-CVD-Verfahrens aufgebracht ist.

6. Glasbehälter nach wenigstens einem der Ansprüche 1 bis 5,
**dadurch gekennzeichnet, daß** die Schicht mittels eines Plasma-lmpuls-CVD-Verfahrens aufgebracht ist.

7. Glasbehälter nach wenigstens einem der Ansprüche 1 bis 6,
**dadurch gekennzeichnet**, .
daß der Glasbehälter ein Injektionsfläschchen, ein Spritzenkörper, ein Glaszylinder oder eine Injektionsflasche ist.

## Claims

1. Glass container for medical purposes, sterilizable by high energy radiation, in particular for the storage of pharmaceutical or diagnostic products, especially solutions, and whose surface in contact with the solution is coated with a coating of oxides and/or nitrides of the elements Si, Ti, Ta, Al or mixtures thereof, **characterized in that** it is of a glass comprising cerium oxide as stabilizer and in that the coating is less than 400 nm thick.

2. Glass container according to Claim 1, **characterized in that** the cerium oxide is present in the glass in an amount of 0.3 to 1.5% by weight.

3. Glass container according to Claim 1 or 2, **characterized in that** the coating is 10 to 200 nm thick.

4. Glass container according to at least one of Claims 1 to 3, **characterized in that** the coating comprises SiO₂.

5. Glass container according to at least one of Claims 1 to 4, **characterized in that** the coating is applied using a plasma CVD process.

6. Glass container according to at least one of Claims 1 to 5, **characterized in that** the coating is applied using a plasma impulse CVD process.

7. Glass container according to at least one of Claims 1 to 6, **characterized in that** the glass container is an injection vial, a syringe body, a glass cylinder or an injection bottle.

## Revendications

1. Récipient en verre pour applications médicales, stérilisable à l'aide d'un rayonnement riche en énergie, en particulier pour la conservation de produits pharmaceutiques ou diagnostiques, en particulier de solutions, dont la surface en contact avec la solution est recouverte d'une couche en oxydes et/ou en nitrures des éléments Si, Ti, Ta, Al ou en mélanges de ces derniers, **caractérisé en ce qu'**il se compose d'un verre contenant un oxyde de cérium en tant que stabilisateur et en ce que la couche est épaisse de moins de 400 nm.

2. Récipient en verre selon la revendication 1, **caractérisé en ce que** l'oxyde de cérium est présent à raison d'une proportion de 0,3 à 1,5% en poids dans le verre.

3. Récipient en verre selon la revendication 1 ou 2, **caractérisé en ce que** la couche est épaisse de 10 à 200 nm.

4. Récipient en verre selon au moins l'une des revendications 1 à 3, **caractérisé en ce que** la couche se compose de SiO_{2.}

5. Récipient en verre selon au moins l'une des revendications 1 à 4, **caractérisé en ce que** la couche est appliquée à l'aide d'un procédé CVD au plasma.

6. Récipient en verre selon au moins l'une des revendications 1 à 5, **caractérisé en ce que** la couche est appliquée à l'aide d'un procédé CVD à impulsion au plasma.

7. Récipient en verre selon au moins l'une des revendications 1 à 6, **caractérisé en ce que** le récipient en verre est un petit flacon d'injection, un corps de seringue, un cylindre de verre ou un flacon d'injection.
